# EUROPÄISCHE PATENTSCHRIFT

(11) **EP 0 613 566 B1**
(45) Veröffentlichungstag und Bekanntmachung des Hinweises auf die Patenterteilung: **05.03.1997**
(21) Anmeldenummer: 93918926.2
(22) Anmeldetag: 30.08.1993
(51) Int. Cl.: G02B 21/06

(54) **SPIEGELGEHÄUSE ZUM ADAPTIEREN VON SEPARATEN LAMPENGEHÄUSEN AN EIN MIKROSKOPSTATIV**
MIRROR HOUSING FOR FITTING SEPARATE LAMP HOUSINGS TO A MICROSCOPE STAND
BOITIER DE MIROIR POUR ADAPTER DES BOITIERS SEPARES DE LAMPE SUR UNE POTENCE DE MICROSCOPE

(30) Priorität: 19.09.1992 DE 4231469
(43) Veröffentlichungstag der Anmeldung: 07.09.1994
(73) Patentinhaber: LEICA MIKROSKOPIE UND SYSTEME GmbH, D-35530 Wetzlar (DE)
(72) Erfinder: FRIMMEL, Horst, D-35586 Wetzlar (DE)
(74) Vertreter: Stamer, Harald, Dipl.-Phys.
(86) Internationale Anmeldenummer: DE9300787
(87) Internationale Veröffentlichungsnummer: WO9407167

(56) Entgegenhaltungen:
- DE-A- 3 642 808
- US-A- 3 798 435
- US-A- 4 148 552
- US-A- 4 284 327

## Beschreibung

Die Erfindung betrifft ein Spiegelgehäuse zum Adaptieren von separaten Lampengehäusen an ein Mikroskopstativ gemäß dem Oberbegriff des Patentanspruchs 1.

Ein Spiegelgehäuse gemäß dem Oberbegriff des Patentanspruchs 1 ist aus der DE 29 02 961 C2 bekannt. In dieser Schrift ist ein Mikroskopstativ für die wahlweise Verwendung von Auf-/ und Durchlichtbeleuchtung dargestellt. Über zwei im Stativrücken vorgesehene Ankoppelvorrichtungen lassen sich separate Spiegelgehäuse mit einem schaltbaren Umlenkspiegel ankoppeln, wobei an die Spiegelgehäuse jeweils zwei separate Lampengehäuse angeflanscht werden können. Die Strom/Spannungsversorgung der Lampengehäuse erfolgt je nach verwendeter Lampenart entweder über eine im Mikroskopstativfuß vorgesehene Stromversorgung mit durchgeschalteten Kontakten in den Ankoppelvorrichtungen und den Spiegelgehäusen oder über eine extern angeordnete zusätzliche Versorgung. Die hier dargestellten Spiegelgehäuse haben sich in der Praxis bewährt. Durch größere und schwerer werdende Lampengehäuse ist die mechanische Stabilitätsgrenze erreicht. Ferner muß die Leistung der Strom-/Spannungsversorgung weiter erhöht werden. Dies zieht jedoch eine immer größer werdende thermischen Belastung der Mikroskope nach sich.

Es ist daher Aufgabe der vorliegenden Erfindung, ausgehend von dem bekannten Spiegelgehäuse die mechanische Stabilität der Ankoppelvorrichtungen zu erhöhen und dabei zusätzlich die thermische Belastung der Mikroskopstative durch die verwendeten Lampengehäuse zu minimieren.

Diese Aufgabe wird erfindungsgemäß durch die im kennzeichnenden Teil des Patentanspruchs 1 angegebenen Merkmale gelöst. Vorteihalfte Weiterbildungen der Erfindung sind Gegenstand der Unteransprüche.

Die Erfindung wird anhand eines Ausführungsbeispiels mit Hilfe der schematischen Zeichnungen näher erläutert.

Es zeigen:
- Fig. 1: eine Seitenansicht des Mikroskopstativs mit Spiegelgehäuse und vier angekoppelten Lampengehäusen,
- Fig. 2: einen Schnitt durch das Spiegelgehäuse.

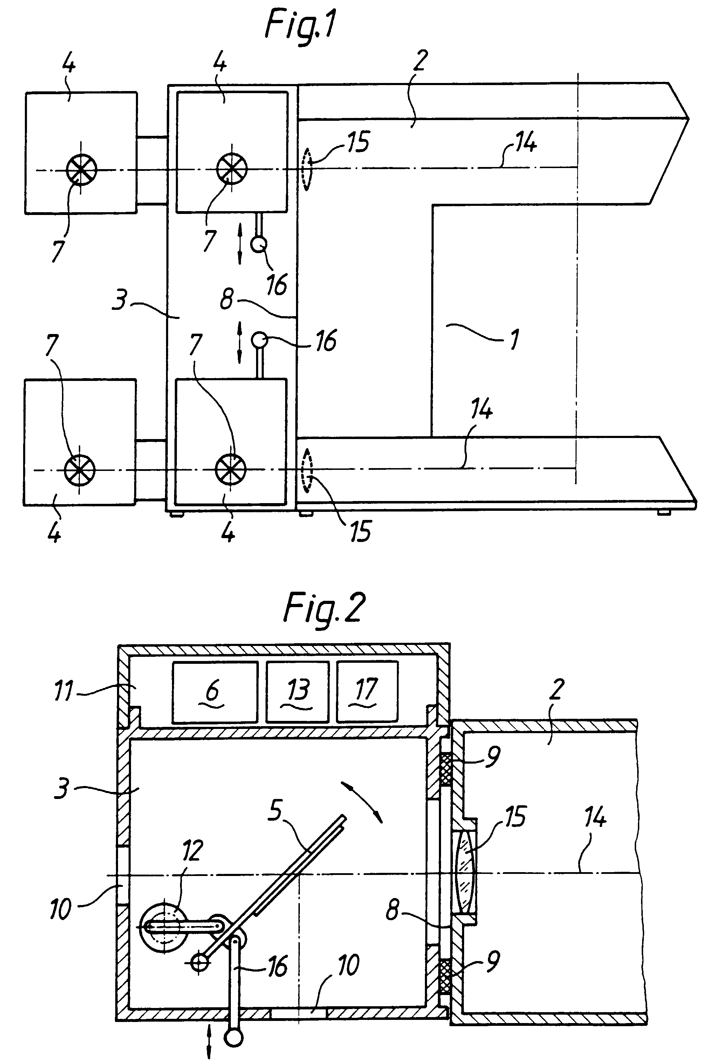

Die Figur 1 zeigt eine Seitenansicht eines Mikroskops 1 mit einem Stativ 2, an dessen Rückenfläche 8 ein einstückig ausgebildetes Spiegelgehäuse 3 angeordnet ist. An das Spiegelgehäuse 3 sind jeweils zwei Lampengehäuse 4 mit den zugehörigen Lichtquellen 7 für die Durch- bzw. Auflichtbeleuchtung vorgesehen. Im Mikroskopstativ 2 ist zum staubdichten Verschluß der beiden Beleuchtungsstrahlengänge 14 je eine Linse 15 angeordnet. Die beiden schematisch dargestellten Schalthebel 16 sind mit je einem hier nicht dargestellen Umlenkspiegel 5 zur Anwahl des Strahlenganges für die jeweiligen Lampengehäuse vorgesehen.

In der Figur 2 ist ein Schnitt durch das Spiegelgehäuse 3 und das Mikroskopstativ mit der Linse 15 dargestellt. Über thermische Isolatoren 9, vorzugsweise mehrere Abstandshalter aus Kunstoff, ist das Spiegelgehäuse 3 am Rücken 8 des Stativs 2 angekoppelt. Das Spiegelgehäuse 3 ist in zwei separate Kammern geteilt, wobei in der Kammer 11 die Strom-/Spannungsversorgung 6 für die ankoppelbaren Lampengehäuse 4 vorgesehen ist. Ferner sind in dieser Kammer 11 die Steuerelektronik 13 zum Ansteuern der Lichtquellen 7 und wahlweise die Steuerelektronik 17 zum Ansteuern eines Motors 12 (hier als motorisch angetriebener Exzenter mit einer Schaltstange dargestellt) zum automatischen Schalten des Umlenkspiegels 5 angeordnet. Diese Ausführungsform ist bevorzugt bei der Ankoppelung einer Blitzleuchte an das Spiegelgehäuse 3 vorgesehen. Die elektrischen Schalter zur Anwahl der jeweils verwenden Lampengehäuse 4 mit deren Lichtquellen 7 sowie die elektrischen Versorgungsleitungen zu den Lampengehäusen sind aus Gründen die Übersichtlichkeit nicht mit dargestellt.

Zur manuellen Betätigung des Umlenkspiegels 5 ist dieser mit einem aus dem Spiegelgehäuse 3 ragenden Schalthebel 16 ausgestattet. Durch Ziehen bzw. Eindrücken des Hebels 16 in Doppelpfeilrichtung können die Adapter 10 mit den hier angekoppelten Lampengehäusen 4 über den Umlenkspiegel 5 angewählt werden.

Zum staubdichten Verschluß des Stativs 2 gegenüber dem Spiegelgehäuse 3 ist im Beleuchtungsstrahlengang 14 eine Linse 15 angeordnet.

Das beschriebene Spiegelgehäuse 3 ist als separates Bauteil ausgeführt und über thermische Isolatoren 9 am Mikroskopstativ 2 angeordnet. Das Spiegelgehäuse 3 weist jeweils zwei Adapter 10 für die Auf- bzw. Durchlichtbeleuchtung auf. An den Adaptern 10 können unterschiedliche Lampengehäuse, auch Blitzleuchten, angekoppelt werden, die über einen schaltbaren Umlenkspiegel 5 in Wirkstellung gebracht werden. Die Strom/Spannungsversorgung 6 und die Steuerelektronik 13 bzw. 17 für die jeweiligen Lampengehäuse 4 ist in einer separaten Kammer 11 des Spiegelgehäuses 3 zur Isolation gegen Wärme und Staub angeordnet.

### Bezugszeichenliste

- 1 -: Mikroskop
- 2 -: Mikroskopstativ
- 3 -: Spiegelgehaüse
- 4 -: Lampengehäuse
- 5 -: Umlenkspiegel
- 6 -: Strom-/Spannungsversorgung
- 7 -: Lichtquellen
- 8 -: Rückenfläche von 2
- 9 -: thermische Isolatoren
- 10 -: Adapter für 4
- 11 -: Kammer
- 12 -: Motor
- 13 -: Steuerelektronik
- 14 -: Beleuchtungsstrahlengänge
- 15 -: Linse
- 16 -: Schalthebel
- 17 -: Steuerelektronik

## Patentansprüche

1. Mikroskop (1) mit einem an das Mikroskopstativ (2) ansetzbaren Spiegelgehäuse (3) mit Adaptern zum Ankoppeln von separaten Lampengehäusen (4), wobei das Spiegelgehäuse (3) schaltbare Spiegelmittel (5) zur wahlweisen Umschaltung zwischen den adaptierten Lampengehäusen (4) aufweist und, mit einer Stromversorgungseinrichtung (6) für die Lichtquellen (7) der Lampengehäuse (4) versehen ist, **dadurch gekennzeichnet**, daß das Spiegelgehäuse (3) als einstückiges Bauelement an der Rückenfläche (8) des Mikroskopstativs (2) über thermische Isolatoren (9) angeordnet ist und Schaltmittel zur wahlweisen Nutzung der Auf- oder Durchlichtbeleuchtung des Mikroskops (1) aufweist, und wenigstens vier Adapter (10) zur Ankopplung der Lampengehäuse (4) vorgesehen sind und zusätzlich im Spiegelgehäuse (3) eine separate Kammer (11) zur Aufnahme der Strom/Spannungsversorgung (6) ausgebildet ist.

2. Mikroskop mit einem an das Mikroskopstativ ansetzbaren Spiegelgehäuse nach Anspruch 1, **dadurch gekennzeichnet**, daß bei der Ankopplung einer Blitzleuchte (7) ein Motor (12) zum automatischen Schalten eines Umlenkspiegels (5) vorgesehen und die zugehörige Steuerelektronik (13) für den Motor (12) in der separaten Kammer (11) der Strom/Spannungsversorgung (6) angeordnet ist.

3. Mikroskop mit einem an das Mikroskopstativ ansetzbaren Spiegelgehäuse nach Anspruch 1 oder 2, **dadurch gekennzeichnet**, daß zum staubdichten Abschluß der Beleuchtungsstrahlengänge (14) für die Auf- und Durchlichtbeleuchtung im Mikroskopstativ (2) an den Anschlußstellen zum Spiegelgehäuse (3) je eine Linse (15) vorgesehen ist.

## Claims

1. Microscope (1) with a mirror housing (3), which is mountable at the microscope stand (2), with adaptors for the coupling-on of separate lamp housings (4), wherein the mirror housing (3) comprises switchable mirror means (5) for the selectable switching-over between the adapted lamp housings (4) and is provided with a current supply equipment (6) for the light sources (7) of the lamp housings (4), characterised thereby, that the mirror housing (3) is arranged as integral constructional element at the rear surface (8) of the microscope stand (2) by way of thermal insulations (9) and comprises switching means for the selectable utilisation of the incident or transmitted light illumination of the microscope (1) and at least four adaptors (10) are provided for the coupling-on of the lamp housings (4) and a separate chamber (11) for the reception of the current or voltage supply unit (6) is formed additionally in the mirror housing (3).

2. Microscope with a mirror housing, which is mountable at the microscope stand, according to claim 1, characterised thereby, that in the case of the coupling-on of a flash bulb (7), a motor (12) is provided for the automatic switching of a deflecting mirror (5) and the associated electronic control system (13) for the motor (12) is arranged in the separate chamber (11) of the current or voltage supply unit (6).

3. Microscope with a mirror housing, which is mountable at the microscope stand, according to claim 1 or 2, characterised thereby, that for the dust-tight shutting-off of both the illumination ray paths (14) for the incident and transmitted light illumination, a respective lens (15) is provided in the microscope stand (2) at the connection places to the mirror housing (3).

## Revendications

1. Microscope (1) comportant un boîtier de miroir (3) pouvant être monté sur la potence du microscope (2), avec des adaptateurs destinés à accoupler des boîtiers de lampe (4) séparés, le boîtier de miroir (3) présentant des moyens réfléchissants (5) de commutation, destinés à commuter sélectivement entre les boîtiers de lampe (4) adaptés, et pourvu d'un dispositif d'alimentation électrique (6) destiné aux sources lumineuses (7) des boîtiers de lampe (4) caractérisé en ce que le boîtier de miroir (3) est disposé sous forme d'élément de construction monopièce sur la face arrière (8) de la potence du microscope (2) par l'intermédiaire d'isolateurs thermiques (9), et présentant des moyens de commutation, destinés à assurer sélectivement l'illumination en surface ou traversante du microscope (2), et au moins quatre adaptateurs (10) destines à assurer le couplage des boîtiers de lampe (4) étant prévus, et en plus une chambre (11) séparée destinée à recevoir l'alimentation en intensité/tension (6) étant réalisée dans le boîtier de miroir (3).

2. Microscope comportant un boîtier de miroir pouvant être monté sur la potence du microscope selon la revendication 1, caractérisé en ce que, lors du couplage d'un luminaire à éclairs (7), un moteur (12) destiné à commuter automatiquement un miroir déviateur (5) est prévu et l'électronique de commande (13) afférente destinée au moteur (12) est disposée dans la chambre (11) séparée du dispositif d'alimentation en intensité/tension (6).

3. Microscope comportant un boîtier de miroir pouvant être monté sur la potence du microscope selon la revendication 1 ou 2, caractérisé en ce qu'une lentille (15) respectivement est prévue aux points de raccordement au boîtier de miroir (3), pour effectuer un cloisonnement étanche aux poussières des chemins de rayonnement de l'illumination (14) prévus pour l'illumination en surface ou traversant, dans la potence de microscope (2).
